(19) Europäisches Patentamt / European Patent Office / Office européen des brevets

(11) EP 2 536 036 A1

(12) **EUROPEAN PATENT APPLICATION**
published in accordance with Art. 153(4) EPC

(43) Date of publication:
**19.12.2012 Bulletin 2012/51**

(51) Int Cl.:
*H04B 7/005* (2006.01)    *H04B 7/06* (2006.01)
*H04B 7/08* (2006.01)

(21) Application number: **10845459.6**

(22) Date of filing: **12.10.2010**

(86) International application number:
**PCT/CN2010/001595**

(87) International publication number:
**WO 2011/097785 (18.08.2011 Gazette 2011/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2010 CN 201010115749**

(71) Applicant: **Alcatel Lucent**
**75007 Paris (FR)**

(72) Inventors:
• **LUO, Qinglin**
**Shanghai 201206 (CN)**
• **SHI, Jing**
**Shanghai 201206 (CN)**

(74) Representative: **2SPL Patentanwälte**
**Postfach 15 17 23**
**80050 München (DE)**

(54) **DEVICE AND METHOD FOR CALIBRATING RECIPROCITY ERRORS**

(57) The present invention provides a method for reciprocity error calibration, comprising steps of: measuring downlink channel response $\mathbf{H}_{DL}$; measuring uplink channel response $\mathbf{H}_{UL}$; calculating one of a user equipment reciprocity error $\mathbf{E}_m$ and a base station reciprocity error $\mathbf{E}_b$ utilizing least square LS criterion based on the $\mathbf{H}_{DL}$ and $\mathbf{H}_{UL}$ in accordance with a reciprocity model

$$\mathbf{H}_{DL} = \mathbf{E}_m^{-1} \mathbf{H}_{UL}^{T} \mathbf{E}_b \; ;$$

calculating the other one of the $\mathbf{E}_m$ and $\mathbf{E}_b$ based on the calculated one of $\mathbf{E}_m$ and $\mathbf{E}_b$ utilizing an algorithm adopting minimum mean square error MMSE criterion; and performing a reciprocity error calibration operation utilizing the calculated user equipment reciprocity error $\mathbf{E}_m$ and base station reciprocity error $\mathbf{E}_b$. There is further provided a reciprocity error calibration device for performing the reciprocity error calibration method. The reciprocity error calibration method and the reciprocity error calibration device according to the present invention may provide better reciprocity error calibration performance.

Fig. 4

EP 2 536 036 A1

**Description**

Technical Field

The present invention relates to wireless communication systems, and specifically to a reciprocity error calibration device and a reciprocity error calibration method.

Technical Background

Channel reciprocity is one of key features of time-division multiplexing TDD systems, which plays a significant role in most TDD (for example, TD-SCDMA, WiMAX, WiFi, etc.) systems and enables the implementation of variety of advanced signal processings (beamforming, MIMO, transmit diversity, etc.). In practice, a plurality of factors would affect the reciprocity errors of uplinks and downlinks, including transceiver mismatch, Doppler effect due to mobility, asymmetric interference etc. It is required to reduce the reciprocity errors through antenna array reciprocity error calibration.

Due to use of a joint processing method (for example, coordinated multi-point processing CoMP), the requirement on the precision of calibration method becomes higher. For example, the conventional calibration method as described in literature [2] cannot meet the performance requirement of joint processing.

Thus, a technical problem to be solved by the present invention is to provide a calibration method that can achieve optimal performance. This method has a stronger robustness and a high precision, and may be applied for advanced processing in the TDD system, for example, beamforming, MU-MIMO, and CoMP, etc.

Reference Literatures:

1. Jian Liu, et al., "OFDM-MIMO WLAN AP Front-end Gain and Phase Mismatch Calibration," Proc. IEEE RAWCON, Sep. 2004

2. A. Bourdoux, B. Come, N. Khaled, Non-reciprocal transceivers in OFDM/SDMA Systems: Impact and Mitigation, in Proc. IEEE Radio and Wireless Conference, Boston, MA, USA, August 2003, pp. 183-186.

3. 3GPP RAN1 Tdoc for LTE and LTE-A, R1-094622, R1-093026, R1-080494, R1-090563, R1-093378, R1-094623, 2009

4. 3GPP RAN1 Tdoc for LTE and LTE-A, R1-100932

Summary of the Invention

According to a first aspect of the present invention, there is provided a method for reciprocity error calibration, comprising steps of: measuring downlink channel response $\mathbf{H}_{DL}$; measuring uplink channel response $\mathbf{H}_{UL}$; calculating one of a user equipment reciprocity error $\mathbf{E}_m$ and a base station reciprocity error $\mathbf{E}_b$ utilizing least square LS criterion

based on the $\mathbf{H}_{DL}$ and $\mathbf{H}_{UL}$ in accordance with a reciprocity model $\mathbf{H}_{DL} = \mathbf{E}_m^{-1} \mathbf{H}_{UL}^{T} \mathbf{E}_b$ ; calculating the other one of the

$\mathbf{E}_m$ and $\mathbf{E}_b$ based on the calculated one of $\mathbf{E}_m$ and $\mathbf{E}_b$ utilizing an algorithm adopting minimum mean square error MMSE criterion; and performing a reciprocity error calibration operation utilizing the calculated user equipment reciprocity error $\mathbf{E}_m$ and base station reciprocity error $\mathbf{E}_b$.

Preferably, the algorithm adopting LS criterion is an elementary least square ELS algorithm.

Preferably, the algorithm adopting MMSE criterion is one of a matrix least square MLS algorithm and a matrix MMSE algorithm.

Preferably, the method further comprises a step of: updating the one of the $\mathbf{E}_m$ and $\mathbf{E}_b$ based on

$\mathbf{H}_{DL} = \mathbf{E}_m^{-1} \mathbf{H}_{UL}^{T} \mathbf{E}_b$ in accordance with the calculated other one of the $\mathbf{E}_m$ and $\mathbf{E}_b$ utilizing a further algorithm adopting MMSE criterion.

Preferably, the further algorithm adopting MMSE criterion is one of a matrix least square MLS algorithm and a matrix MMSE algorithm.

Preferably, the method is performed at a user equipment or a base station.

According to a second aspect of the present invention, there is provided a device for reciprocity error calibration, comprising: a downlink measurement module configured to measure downlink channel response $\mathbf{H}_{DL}$; an uplink measurement module configured to measure uplink channel response $\mathbf{H}_{UL}$; an LS calculation module configured to calculate one of a user equipment reciprocity error $\mathbf{E}_m$ and a base station reciprocity error $\mathbf{E}_b$ utilizing least square LS criterion based on the $\mathbf{H}_{DL}$ and $\mathbf{H}_{UL}$ in accordance with a reciprocity model $\mathbf{H}_{DL} = \mathbf{E}_m^{-1} \mathbf{H}_{UL}^T \mathbf{E}_b$; an MMSE calculation module configured to calculate the other one of the $\mathbf{E}_m$ and $\mathbf{E}_b$ based on the calculated one of the $\mathbf{E}_m$ and $\mathbf{E}_b$ utilizing an algorithm adopting minimum mean square error MMSE criterion; and a reciprocity error calibration module configured to perform a reciprocity error calibration operation utilizing the calculated user equipment reciprocity error $\mathbf{E}_m$ and base station reciprocity error $\mathbf{E}_b$.

According to the embodiments of the present invention, there is provided a UE/eNB reciprocity calibration solution for TDD systems, which is applicable to a single cell or CoMP scenario. The reciprocity error calibration method and the reciprocity error calibration device according to the embodiments of the present invention may provide a better reciprocity error calibration and improve the performance of the channel reciprocity-based TDD systems, especially in a normally working SNR range.

Brief Description of the Drawings

The above and other objectives, features and advantages of the present invention will become more apparent through the preferred embodiments as described below in conjunction with the accompanying drawings, wherein:

Fig. 1 illustrates a structural diagram of a conventional TDD system equipped with a self-calibration circuit;

Fig. 2 illustrates a schematic diagram of the structures of a base station eNB and a user equipment UE in a conventional over-the-air calibration-enabled TDD system and the calibration signaling therebetween;

Fig. 3 illustrates a schematic block diagram of a system model according to the embodiments of the present invention;

Fig. 4 illustrates a flow chart of a reciprocity error calibration method according to the embodiments of the present invention;

Fig. 5 illustrates a block diagram of a reciprocity error calibration device according to the embodiments of the present invention; and

Fig. 6 illustrates a simulation result of comparing the reciprocity error calibration method according to the embodiments of the present invention and the conventional reciprocity error calibration method.

Detailed Description of the Preferred Embodiments

Hereinafter, a plurality of embodiments of the present invention will be described. The subsequent description provides details for thoroughly understanding these embodiments. However, it is to be understood by those skilled in the art that the present invention may also be implemented without some of the details. Furthermore, some known structures or functions might not be illustrated or described in detail so as to unnecessarily obscure relevant depictions on the plurality of embodiments of the present invention.

Uplink (UL)/downlink (DL) channel reciprocity is one of key features of a TDD system. However, transmit (TX) /receive (RX) radio frequency (RF) circuit mismatch in UE and eNB, Doppler asymmetry due to mobility, and estimation algorithm error between UE and eNB may cause channel reciprocity between UL and DL does not necessarily always exist. Thus, antenna array reciprocity error calibration is required to satisfy needs under various situations.

Self calibration (Self Cal) does not require air-interface signaling and can provide full band accurate RF mismatch calibration, and thus has been deployed in many TDD systems. Over-the-air calibration (OTA Cal) is a pure software calibration, and typically does not require any hardware support. Most importantly, over-the-air calibration does not require absolute reciprocity measurement in a distributed antenna system, and thus OTA Cal has attracted great interests from 3GPP LTE-A community.

In order to better understand the present invention, the self-calibration method and over-the-air calibration method in the prior art will be briefly described first.

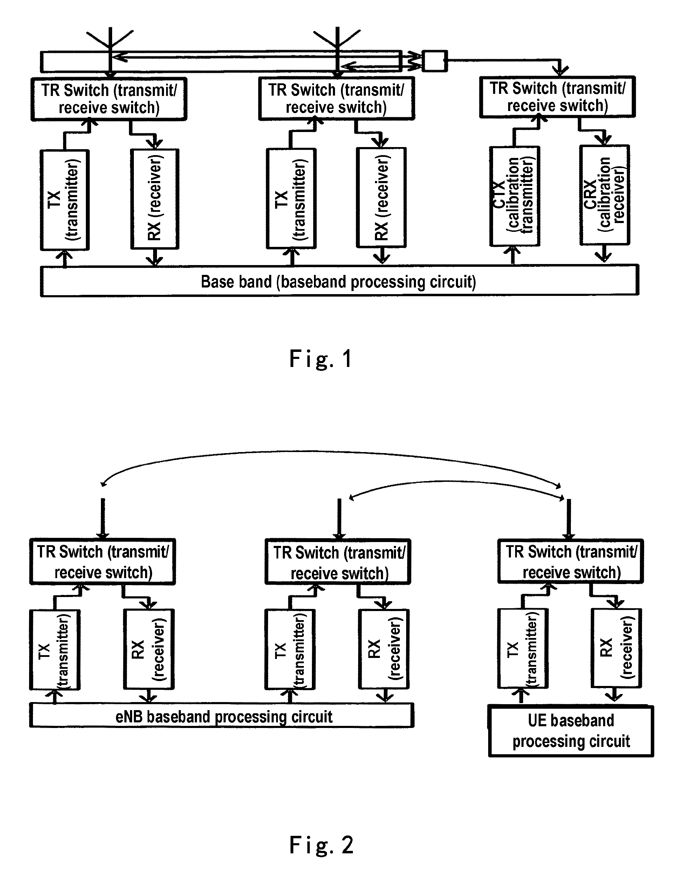

Fig. 1 illustrates a structural diagram of a conventional TDD system equipped with a self-calibration circuit. In Fig. 1, TX and RX represent a transmitter and a receiver, respectively; CTX and CRX represent a calibration transmitter and a calibration receiver, respectively; the TR Switch represents a transmit/ receive switch; and Base Band represents a base band processing circuit. Fig. 1 mainly illustrates the reciprocity calibration at a base station eNB side. The following narrow band variables may be defined:

$h_{1,i}$ : measured response from TX calibration loop of the ith antenna
$h_{2,i}$ : measured response from RX calibration loop of the ith antenna
$h_{bt,i}$ : the TX response of the ith antenna of the base station
$h_{br,i}$ : the RX response of the ith antenna of the base station
$h_{ct}$ : the calibrated TX response
$h_{cr}$ : the calibrated RX response

The self-calibration process at a conventional base station eNB side may be described using the following equations:

(A1) measuring channel response:

$$h_{1,i} = h_{bt,i} h_{cr},$$

$$h_{2,i} = h_{ct} h_{br,i}$$

(B1) calculating reciprocity of the ith antenna:

$$\widetilde{w}_i = \frac{h_{1,i}}{h_{2,i}} = \frac{h_{bt,i}}{h_{br,i}} \frac{h_{cr}}{h_{ct}} = \frac{w_i}{w_c}$$

where

$$w_i = \frac{h_{bt,i}}{h_{br,i}}, \quad w_c = \frac{h_{ct}}{h_{cr}}.$$

(C1) normalizing and obtaining a relative reciprocity:

$$\overline{w}_i = \frac{\widetilde{w}_i}{\widetilde{w}_1} = \frac{h_{1,i}}{h_{2,i}} \frac{h_{2,1}}{h_{1,1}}$$

Here, $\overline{w}_1$ may be selected as a reference reciprocity of the eNB, and $\overline{w}_i$ as a calibration weight for the ith antenna.
Hereinafter, a conventional over-the-air calibration is described with reference to Fig. 2.
Fig. 2 illustrates a schematic diagram of the structures of a base station eNB and a user equipment UE in a conventional over-the-air calibration-enabled TDD system and the calibration signaling therebetween. TX and RX represent a transmitter and a receiver, respectively; and TR Switch represents a transmit/receive switch. The following variables may be defined:

$h_{1,i}$ : measured response from TX calibration loop of the ith antenna
$h_{2,i}$ : measured response from RX calibration loop of the ith antenna

$h_{bt,i}$ : the TX response of the ith antenna of the base station
$h_{br,i}$ : the RX response of the ith antenna of the base station
$h_{mt}$ : the TX response of the UE
$h_{mt}$ : the TX response of the UE
$h_{mr}$ : the RX response of the UE
$h_{ai,i}$ : the air interface response of the ith antenna

A conventional over-the-air calibration process will be described using the following equations:

(A2) measuring the channel responses:

$$h_{1,i} = h_{bt,i} h_{ai,i} h_{mr},$$

$$h_{2,i} = h_{mt} h_{ai,i} h_{br,i}$$

(B2) calculating the reciprocal of the ith antenna:

$$\widetilde{w}_i = \frac{h_{1,i}}{h_{2,i}} = \frac{h_{bt,i}}{h_{br,i}} \frac{h_{mr}}{h_{mt}} = \frac{w_i}{w_m}$$

where

$$w_i = \frac{h_{bt,i}}{h_{br,i}}, \quad w_c = \frac{h_{mt}}{h_{mr}}.$$

(c2) normalizing and obtaining a relative reciprocity:

$$\overline{w}_i = \frac{\widetilde{w}_i}{\widetilde{w}_1} = \frac{h_{1,i}}{h_{2,i}} \frac{h_{2,1}}{h_{1,1}}$$

Here, $\overline{w}_1$ may be selected as a reference reciprocity of the eNB, and $\overline{w}_i$ as the calibration weight for the ith antenna.

For a distributed antenna system such as a coordinated multi-point (CoMP) processing system, it is usually not practical to transmit RF pilots between geographically separated antenna elements. In this case, the conventional self-calibration method would become infeasible , but an improved self-calibration or over-the-air calibration with the aid of backhaul signaling may be used (see literature [3]).

For conventional calibration solutions for TDD CoMP, a logic channel should be allocated on the eNB to eNB link (for example, X.2) for transmitting a global reference reciprocity. For self-calibration based TDD system, the global reference may be an absolute reciprocity of a certain calibrated TX response/RX response. For over-the-air calibration based TDD systems, the global reference may be a measured reciprocity of any antenna branch of the eNB participating into the calibration (see literature [3]).

Without losing generality, as illustrated in Fig. 2, the over-the-air calibration is assumed to direct to systems with a location-centralized antenna array. The new technology may be directly extended to a distributed over-the-air calibration system or a self-calibration scenario in either collectively located or distributed antenna array system, e.g., by taking the calibration transceiver(s) as the UE and the hardware calibration network as the air interface channels, and exchanging global references via the backhaul link if needed.

For the over-the-air reciprocity calibration, due to its hardware advantage over UE, it is usually the eNB that takes charge of collecting uplink and downlink channel measurements and calculating the reciprocity calibration weight. Hereinafter, it is assumed that the calibration operation is performed in the eNB, which, however, is not intended to exclude the possibility of performing calibration in the UE (see the literature [4]). The present invention is equally applicable for the scenario of performing calibration at UE.

Both literature [1] and [2] describe a collective self-calibration technical solution for different systems. Literature [3] proposes an over-the-air calibration technical solution for LTE and LTE-A systems. Although different implementation methods are provided for different applications in different literatures, the basic concepts as adopted thereby to estimate the downlink channel reciprocity error through the measured uplink channel reciprocity error or estimate the uplink channel reciprocity error through the measured downlink channel reciprocity error. In other words, the objective is to guarantee the least square LS error based on a simple dot-division.

The advantage of the algorithm adopting the least square LS criterion lies in the simplicity in calculation. However, since estimating error by square will cause loss of system performance, this algorithm cannot achieve optimal performance.

In order to optimize the performance, both the UE side and BS side reciprocity errors should be calibrated simultaneously. A basic idea of the present invention lies in after calculating the reciprocity-calibrated channel response of the uplink (downlink) channel according to a known calibration algorithm (for example, an algorithm adopting the LS criterion), using an algorithm adopting a more optimal criterion to estimate reciprocity errors. The idea of the present invention may be applied to both the over-the-air calibration and the self-calibration.

In the idea of the present invention, the more optimal criterion may be a minimum mean square error (MMSE) criterion, and the algorithm adopting the more optimal criterion may be for example a matrix least-square (MLS) algorithm and a matrix MMSE algorithm.

In order to derive the new calibration method, a more practical and feasible reciprocity error calibration process according to the embodiments of the present invention will be described based on the [3GPP RAN1 Tdoc for LTE and LTE-A, R1-094622] model.

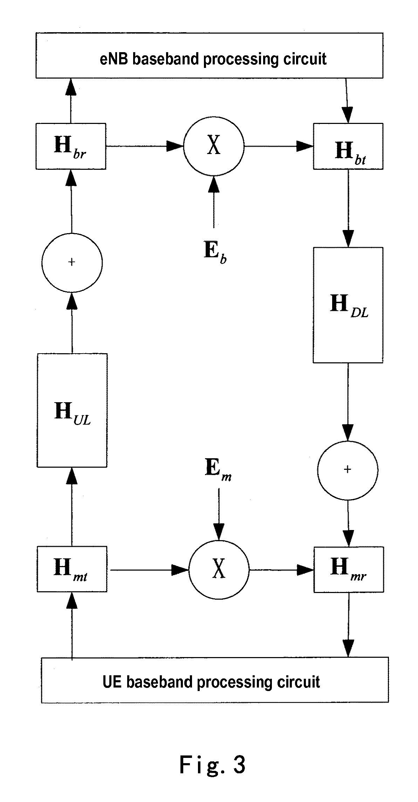

Fig. 3 shows a schematic block diagram of a system model according to the embodiments of the present invention.

A radio transmitter has a RF circuit different from that of the radio receiver. It is assumed that the coupling effect between antennas is relatively weak relative to the response of the antenna unit itself. The effective channel response $\mathbf{H} \in \{\mathbf{H}_{br}, \mathbf{H}_{bt}, \mathbf{H}_{mr}, \mathbf{H}_{mt}\}$ of the RF channel may be modeled as a matrix with an "approximate diagonal" feature, for example:

$$\mathbf{H} = \begin{bmatrix} h_{11} & h_{12} & ... & h_{1L} \\ h_{21} & h_{22} & ... & ... \\ ... & ... & ... & ... \\ h_{L1} & ... & ... & h_{LL} \end{bmatrix} \qquad (1)$$

where $|h_{ii}| >> |h_{ij}|$ and $|h_{ii}| >> |h_{ji}|$, for any $i \neq j$, $i, j = 1,...,L$, where L is the number of antennas participating in the calibration. It is assumed the number of antennas of eNB is N and the number of antennas of UE is M, then for the eNB, $L=N$, , and for the UE, $L=M$. By going through a RF path including both the eNB and the UE, the actual channel downlink and uplink as experienced by the signal is:

$$\begin{aligned} \mathbf{H}_{DL} &= \mathbf{H}_{mr} \mathbf{H}_{AI,DL} \mathbf{H}_{bt} \\ \mathbf{H}_{UL} &= \mathbf{H}_{br} \mathbf{H}_{AI,UL} \mathbf{H}_{mt} \end{aligned} \qquad (2)$$

Supposition 1): the uplink and downlink transmission are within a channel coherence time, for example, $\mathbf{H}_{AI,DL} = \mathbf{H}^T_{AI,UL}$;

Supposition 2): $\mathbf{H}_{br}$, $\mathbf{H}_{bt}$, $\mathbf{H}_{mr}$, $\mathbf{H}_{mt}$ are all full rank matrixes, for example, for $\mathbf{H} \in \{\mathbf{H}_{br}, \mathbf{H}_{bt}, \mathbf{H}_{mr}, \mathbf{H}_{mt}\}$; rank($\mathbf{H}$) = L; for $\mathbf{H}_{mr}$ and $\mathbf{H}_{mt}$, L = M; while for $\mathbf{H}_{br}$ and $\mathbf{H}_{bt}$, L = N.

Applying the above suppositions into the above two equations, it is derived that

$$\mathbf{H}_{DL} = \mathbf{H}_{mr} \mathbf{H}_{mt}^{-T} \mathbf{H}_{UL}^{T} \mathbf{H}_{br}^{-T} \mathbf{H}_{bt} \qquad (3)$$

By defining

$$\begin{matrix} \mathbf{E}_m = \mathbf{H}_{mt}^{T} \mathbf{H}_{mr}^{-1} \\ \mathbf{E}_b = \mathbf{H}_{br}^{-T} \mathbf{H}_{bt} \end{matrix} , \qquad (4)$$

it is derived

$$\mathbf{H}_{DL} = \mathbf{E}_m^{-1} \mathbf{H}_{UL}^{T} \mathbf{E}_b \qquad (5)$$

The equation (5) provides a model for reciprocity between the actual uplink and downlink.

The objective of the reciprocity error calibration is to calculate the eNB side reciprocity error $\mathbf{E}_b$ and the UE side reciprocity error $\mathbf{E}_m$, and apply them to compensate user signals so as to use $\mathbf{H}_{UL}$ to predict $\mathbf{H}_{DL}$ so as to guarantee the reciprocity between $\mathbf{H}_{DL}$ and $\mathbf{H}_{UL}$; vice versa.

For systems with uplink and downlink channel measurement pilots, $\mathbf{H}_{DL}$ and $\mathbf{H}_{UL}$ may be measured through reference signals, for example, the downlink channel condition information reference signal CSI-RS and uplink reference signal SRS in LTE-A. Thus, for the equation $\mathbf{H}_{DL} = \mathbf{E}_m^{-1} \mathbf{H}_{UL}^{T} \mathbf{E}_b$, because its two independent matrixes $\mathbf{E}_b$ and $\mathbf{E}_m$ are unknown, it apparently cannot be directly resolved.

Literature [4] provides an elementary dot-division-based resolving method, where it is modeled based on a supposition that all transceiver responses are pandiagonal (for example, $h_{ul,ij} = 0$, $h_{dl,ij} = 0$, $i \neq j$). Since any complex reciprocity error c resided in a plurality of calibrated channels would not impact the antenna array gain, the equation

$\mathbf{H}_{DL} = \mathbf{E}_m^{-1} \mathbf{H}_{UL}^{T} \mathbf{E}_b$ may be resolved and has limitless solutions when the channel response matrix is pandiagonal and one element in one of $\mathbf{E}_b$ and $\mathbf{E}_m$ is taken as a reciprocity reference. Hereinafter, a multi-parameter estimation problem is expressed through a mathematic equation and the association between $\mathbf{E}_b$ and $\mathbf{E}_m$ is eliminated so as to minimize the minimum-mean square error MMSE, rather than to minimize the least-square LS error as in the above literature.

Let

$$\begin{matrix} \hat{\mathbf{H}}_{DL} = \mathbf{A}_l \mathbf{H}_{DL} \mathbf{A}_r + \mathbf{N}_{DL} \\ \hat{\mathbf{H}}_{UL} = \mathbf{B}_l \mathbf{H}_{UL} \mathbf{B}_r + \mathbf{N}_{UL} \end{matrix} \qquad (6)$$

respectively represent the estimated downlink and uplink channel responses $\mathbf{H}_{DL}$ and $\mathbf{H}_{UL}$ with erroneous coefficient square matrix $\mathbf{A}_l$, $\mathbf{A}_r$, $\mathbf{B}_l$, $\mathbf{B}_r$ and complex additive white Gaussian noises $N_{DL}$ and $N_{UL}$. Assume $\mathbf{A}_l$, $\mathbf{A}_r$, $\mathbf{B}_l$, $\mathbf{B}_r$ are all full rank matrixes, and by applying the reciprocity model (5) into the equation (6), it is derived

$$\hat{\mathbf{H}}_{DL} = \mathbf{A}_l \mathbf{E}_m^{-1} \mathbf{B}_r^{-T} \hat{\mathbf{H}}_{UL}^{T} \mathbf{B}_l^{-T} \mathbf{E}_b \mathbf{A}_r + \mathbf{N}_{DL} - \mathbf{A}_l \mathbf{E}_m^{-1} \mathbf{B}_l^{-T} \mathbf{N}_{UL}^{T} \mathbf{B}_r^{-T} \mathbf{E}_b \mathbf{A}_r .$$

Let

$$\mathbf{E}_l^{-1} = \mathbf{A}_l \mathbf{E}_m^{-1} \mathbf{B}_r^{-T} ,$$

$$\mathbf{E}_r = \mathbf{B}_l^{-T} \mathbf{E}_b \mathbf{A}_r ,$$

$$\mathbf{N}_E = \mathbf{N}_{DL} - \mathbf{E}_l^{-1} \mathbf{N}_{UL}^T \mathbf{E}_r$$

The above equation may be written as

$$\hat{\mathbf{H}}_{DL} = \mathbf{E}_l^{-1} \hat{\mathbf{H}}_{UL}^T \mathbf{E}_r + \mathbf{N}_E \qquad (7)$$

where $\mathbf{N}_E$ is a matrix whose elements follow independent complex Gaussian distribution with $CN(0, \sigma_{N_E}^2$ ).

In order to estimate the right multiplication matrix $\mathbf{E}_r$ or left multiplication matrix $\mathbf{E}_l$, the following suppositions have to be introduced:

Supposition 3): the antenna coupling effect is sufficiently small and thus may be ignored. For example, $\mathbf{H}_{br}$, $\mathbf{H}_{bt}$, $\mathbf{H}_{mr}$, $\mathbf{H}_{mt}$ are all diagonal and thus $\mathbf{E}_b$ and $\mathbf{E}_m$ are both diagonal.
Supposition 4): there is no matrix coefficient type of channel estimation errors, all estimation errors are of noise type, for example, $\mathbf{A}_l, \mathbf{A}_r, \mathbf{B}_l, \mathbf{B}_r$ are all identity matrixes.

Utilizing supposition (3), by selecting a reciprocity reference, i.e., the reciprocity error $e_{m,1}$ of the first antenna branch of the UE, $\mathbf{E}_m$ (identical to the estimation of $\mathbf{E}_l$ with supposition (4)) may be first estimated through the elementary least square ELS (literature [4]) estimation algorithm , to eliminate the association between $\mathbf{E}_m$ and $\mathbf{E}_b$.

$$\hat{\mathbf{E}}_m^{-1} = \hat{\mathbf{E}}_l^{-1} = diag([e_{m,1}^{-1}, e_{m,2}^{-1} ..., e_{m,M}^{-1}]) \qquad (8)$$

where
$$\begin{cases} e_{m,1}^{-1} = e_{m,1}^{-1} \\ e_{m,2}^{-1} = e_{m,1}^{-1} \hat{h}_{dl,11}^{-1} \hat{h}_{ul,11} \hat{h}_{ul,21}^{-1} \hat{h}_{dl,21} \\ ... \\ e_{m,M}^{-1} = e_{m,1}^{-1} \hat{h}_{dl,11}^{-1} \hat{h}_{ul,11} \hat{h}_{ul,M1}^{-1} \hat{h}_{dl,M1} \end{cases}$$

where $diag[]$ represents diagonal transformation.
By applying equation (8) to equation (7) and moving $\hat{\mathbf{E}}_l$ to the right, it may be derived

$$\hat{\mathbf{E}}_l \hat{\mathbf{H}}_{DL} = \hat{\mathbf{H}}_{UL}^T \mathbf{E}_r + \hat{\mathbf{E}}_l \mathbf{N}_E \qquad (9)$$

Now, in order to obtain better performance, $\mathbf{E}_b$ (identical to the estimation of $\mathbf{E}_r$ with supposition 4)) may be estimated by utilizing the matrix least square (MLS) estimation algorithm, the matrix minimum mean square error (MMSE) estimation algorithm or other variants thereof.
The advantage of the MMSE-based estimation algorithm over the ELS algorithm adopted in literature [4] lies in that it does not need the establishment of supposition (3), and thus it will better conform to the actual conditions, thereby capable of providing a better reciprocity error calibration performance.
Hereinafter, only the embodiments of typical matrix LS and matrix MMSE estimation algorithms are illustrated. According to different design requirements (trade-off between complexity and performance), other variants may be implemented by referencing to [J. Proakis, "Digital Communications," McGraw-Hill Science, 4 edition, August 15, 2000].
**The matrix least square LS estimation method:**

$$\hat{\mathbf{E}}_r = (\hat{\mathbf{H}}_{UL}^T)^+ \hat{\mathbf{E}}_l \hat{\mathbf{H}}_{DL} \qquad\qquad (10)$$

where $(\bullet)^+$ indicates the left inversion of a matrix.

**The matrix MMSE estimation method:**

$$\hat{\mathbf{E}}_r = \mathbf{R}_{E_r E_r} [\mathbf{R}_{E_r E_r} + \sigma_{E_l N}^2 (\hat{\mathbf{H}}_{UL}^H \hat{\mathbf{H}}_{UL})^{-1}]^{-1} (\hat{\mathbf{H}}_{UL}^T)^+ \hat{\mathbf{E}}_l \hat{\mathbf{H}}_{DL} \qquad\qquad (11)$$

where $\mathbf{R}_{E_r E_r} = \mathbf{E}_r \mathbf{E}_r^H$ is the second order statistic (auto-covariance) of $\mathbf{E}_r$ and $\sigma_{E_l N}^2$ is the power density of the noise

$\hat{\mathbf{E}}_l \mathbf{N}_E = \hat{\mathbf{E}}_l \mathbf{N}_{DL} - \hat{\mathbf{E}}_l \mathbf{E}_l \mathbf{N}_{UL}^T \mathbf{E}_r$ which can be approximated by $\sigma_{UL}^2 + \sigma_{DL}^2$. $\mathbf{R}_{E_r E_r}$ can be calculated from previous estimations of $\hat{\mathbf{E}}_r$.

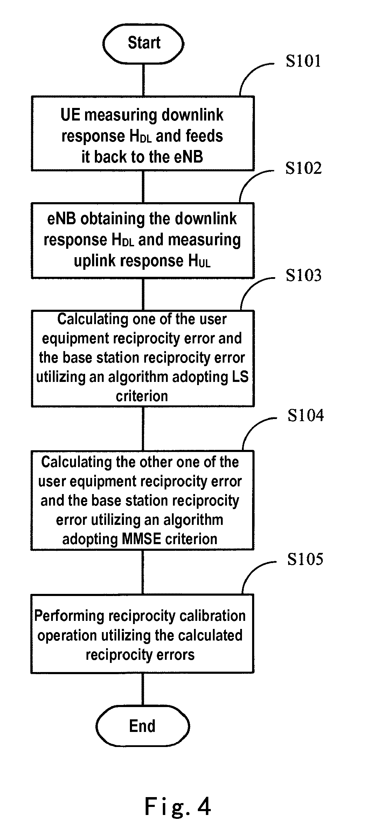

In order to better understand the present invention, the reciprocity error calibration method according to the preferred embodiments of the present invention will be described with reference to Fig. 4 in the following.

Fig. 4 illustrates a flow chart of a reciprocity error calibration method according to the embodiments of the present invention.

First, in step S101, the UE measures downlink channel response $\mathbf{H}_{DL}$ from all of its antennas and feeds the measured $\mathbf{H}_{DL}$ to eNB. For example, the measured $\mathbf{H}_{DL}$ may be fed back to eNB through the channel state information (CSI).

In step S102, the eNB measures the uplink channel response $\mathbf{H}_{UL}$ based on the uplink reference signal (sounding reference signal, SRS).

In step S103, the eNB calculates one of a user equipment reciprocity error $\mathbf{E}_m$ and a base station reciprocity error $\mathbf{E}_b$ based on the $\mathbf{H}_{DL}$ and the $\mathbf{H}_{UL}$ utilizing an algorithm adopting LS criterion in accordance with a reciprocity model

$\mathbf{H}_{DL} = \mathbf{E}_m^{-1} \mathbf{H}_{UL}^T \mathbf{E}_b$ . For example, the eNB may calculate the user equipment reciprocity error $\mathbf{E}_m$ utilizing the ELS

algorithm in accordance with the above equations (6) ~ (8).

In step S104, the eNB utilizes another algorithm adopting the MMSE criterion to calculate the other one of $\mathbf{E}_m$ and $\mathbf{E}_b$ based on the calculated one of the $\mathbf{E}_m$ and $\mathbf{E}_b$ . For example, as above mentioned, the eNB calculates the base station reciprocity error $\mathbf{E}_b$ utilizing the matrix LS algorithm or the matrix MMSE algorithm based on the calculated user equipment reciprocity error $\mathbf{E}_m$.

Finally, in step S105, the eNB performs the reciprocity error calibration operation based on the calculated user equipment reciprocity error $\mathbf{E}_m$ and base station reciprocity error $\mathbf{E}_b$.

Specifically, in step S105, as above mentioned, the equation $\mathbf{H}_{DL} = \mathbf{E}_m^{-1} \mathbf{H}_{UL}^T \mathbf{E}_b$ is resolved based on the supposition that the channel response matrix is pandiagonal (for example, $h_{ul,ij} = 0$, $h_{di,ij} = 0$, $i \neq j$) and taking one of $e_{m,1}$ and $e_{b,1}$ (or any element in $\mathbf{E}_m$ and $\mathbf{E}_b$) as a reference. In step S104, the other one of $\mathbf{E}_m$ and $\mathbf{E}_b$ is calculated, without the supposition, based on the calculated one of $\mathbf{E}_m$ and $\mathbf{E}_b$ utilizing the MLS or matrix MMSE.

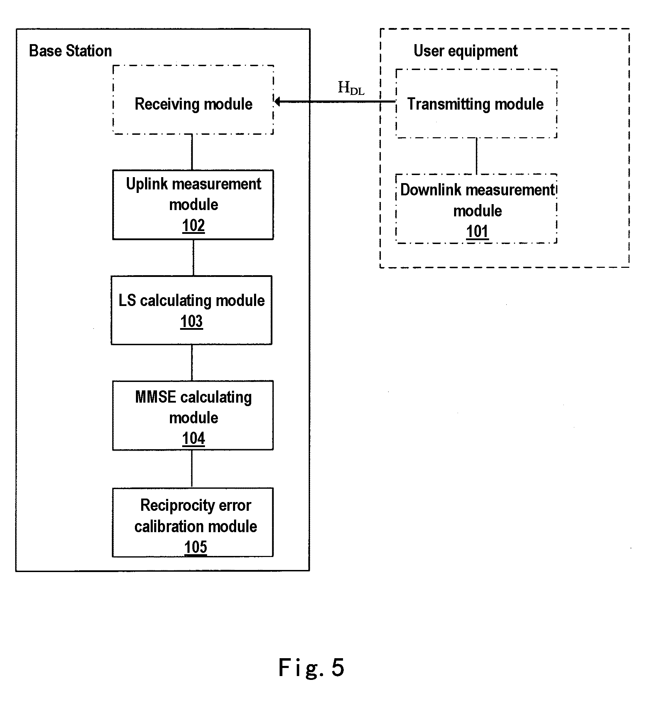

Fig. 5 illustrates a block diagram of a reciprocity error calibration device according to the embodiments of the present invention.

As illustrated in Fig. 5, the reciprocity error calibration device according to the embodiments of the present invention comprises: a downlink measurement module 101 configured to obtain downlink channel response $\mathbf{H}_{DL}$ through measurement; an uplink measurement module 102 configured to obtain uplink channel response $\mathbf{H}_{UL}$ through measurement; an LS calculation module 103 configured to calculate one of a user equipment reciprocity error $\mathbf{E}_m$ and a base station reciprocity error $\mathbf{E}_b$ based on the $\mathbf{H}_{DL}$ and $\mathbf{H}_{UL}$ utilizing an algorithm adopting LS criterion in accordance with

$\mathbf{H}_{DL} = \mathbf{E}_m^{-1} \mathbf{H}_{UL}^T \mathbf{E}_b$ ; an MMSE calculation module 104 configured to calculate the other one of the $\mathbf{E}_m$ and $\mathbf{E}_b$ utilizing

another algorithm adopting MMSE criterion based on the calculated one of the $\mathbf{E}_m$ and $\mathbf{E}_b$; and a reciprocity error calibration module 104 configured to perform a reciprocity calibration operation utilizing the calculated reciprocity errors $\mathbf{E}_m$ and $\mathbf{E}_b$.

The reciprocity error calibration method and reciprocity error calibration device according to the embodiments of the present invention as described with reference to Fig. 4 and Fig. 5 are illustrated to be implemented at the eNB. However, those skilled in the art would appreciate that the present invention is not limited thereto. The reciprocity error calibration method and reciprocity error calibration device according to the embodiments of the present invention may also be implemented at the UE. For example, the downlink measurement module 101 may be disposed at the UE. In this case, the reciprocity error calibration device according to the embodiments of the present invention further comprises a transmitting module disposed at the UE, configured to transmit to the eNB the downlink channel responses $\mathbf{H}_{DL}$ measured by the UE from all of its antennas; and a receiving module disposed at the eNB, configured to receive the downlink channel response $\mathbf{H}_{DL}$ from the UE.

Hereinafter, the proposed method will be verified through simulation. The parameters as adopted by the simulation are specified below: LTA-A link, 3 UEs, 3eNBs, each UE equipped with two antennas, each eNB equipped with 4 antennas, 16QAM, Turbo code, 1mps speed, Urban micro cell scenario, -5dB inter-cell interference, 6-bit channel quantization for feedback.

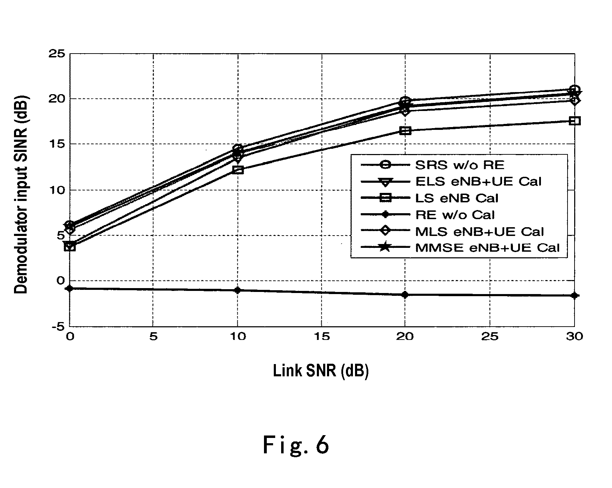

Fig. 6 illustrates simulation results from comparing the reciprocity error calibration method according to the embodiments of the present invention and the conventional reciprocity error calibration method.

In order to obtain the results quickly and reliably, the Signal to Interference plus Noise Ratio (SINR) of a demodulator input signals is utilized as a performance metric. By looking up the input/output SNR mapping table of the 16QAM+Turbo code, the metric may be mapped to BER/BLER.

In Fig. 6, "SRS w/o RE" indicates a channel measurement result without reciprocity error; "ELS eNB + UE Cal" indicates a channel measurement result of performing the reciprocity error calibration to both the base station and the terminal utilizing the ELS estimation algorithm; "LS eNB Cal" indicates the channel measurement result of merely performing LS reciprocity error calibration to eNB; "RE w/o Cal" indicates the channel measurement result without applying any reciprocity error calibration; "MLS eNB + UE Cal" indicates the channel measurement result of performing reciprocity error calibration to both the base station and the terminal utilizing the MLS estimation algorithm; "MMSE eNB+UE Cal" indicates the channel estimation result of performing the reciprocity error calibration to both the base station and the terminal utilizing the MMSE estimation algorithm.

It is seen from Fig. 6 that the MMSE estimation algorithm at the eNB side may realize almost perfect performance, particularly in the working SNR scope (0dB-20dB). The matrix LS (MLS) estimation algorithm may also provide a greater gain at low SNR. For SNR=0dB through the MMSE calibration algorithm of the present invention, a link gain of about 2dB may be realized.

It should be noted that iterative estimation on the UE side reciprocity error and the eNB side reciprocity error may be performed based on the aforementioned model. For example, the ELS estimation algorithm may be used to estimate $\mathbf{E}_m$, and then the MMSE estimation algorithm is used to estimate $\mathbf{E}_b$, and next, $\mathbf{E}_m$ is updated using the matrix MMSE estimation algorithm. The process may also be started from the ELS estimation algorithm of $\mathbf{E}_b$, i.e., using the ELS estimation algorithm to estimate $\mathbf{E}_b$, and then using the MMSE estimation algorithm to estimate $\mathbf{E}_m$, and next, using the matrix MMSE estimation algorithm to update $\mathbf{E}_b$.

The present invention provides a UE/eNB reciprocity calibration solution for TDD systems, which is applicable to a single cell or CoMP scenario, such that the performance of channel reciprocity-based TDD systems is improved, particularly in a normally working SNR range.

Although the functions implemented by the base station according to the embodiments of the present invention are described in the form of method steps, each step as illustrated in Fig. 4 may be implemented by one or more functional modules as illustrated in Fig. 5. The functional modules may also be integrated into one chip or one device in actual application. A person of normal skill in the art should understand that the base station in the embodiments of the present invention may also include any units or modules for other purposes.

A person of skill in the art would readily recognize that steps of various above described methods may be performed by programmed computers. Herein, some embodiments are also intended to cover machine or computer readable program storage devices, e.g., digital data storage media, and encoded machine executable or computer executable programs of instructions, wherein said instructions perform some or all of the steps of said above described methods. The program storage devices may be, e.g., digital storage, magnetic storage media such as magnetic disks and magnetic tapes, hard drives, or optically readable digital data storage media. The embodiments are also intended to cover computers programmed to execute programs recorded on storage media to perform said steps of the above described methods.

The above description and figures merely illustrate the principle of the present invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for reciprocity error calibration, comprising steps of:

   measuring downlink channel response $\mathbf{H}_{DL}$;
   measuring uplink channel response $\mathbf{H}_{UL}$;
   calculating one of a user equipment reciprocity error $\mathbf{E}_m$ and a base station reciprocity error $\mathbf{E}_b$ utilizing least square LS criterion based on the $\mathbf{H}_{DL}$ and $\mathbf{H}_{UL}$ in accordance with a reciprocity model $\mathbf{H}_{DL} = \mathbf{E}_m^{-1} \mathbf{H}_{UL}^T \mathbf{E}_b$;

   calculating the other one of the $\mathbf{E}_m$ and $\mathbf{E}_b$ based on the calculated one of $\mathbf{E}_m$ and $\mathbf{E}_b$ utilizing an algorithm
   adopting minimum mean square error MMSE criterion; and
   performing a reciprocity error calibration operation utilizing the calculated user equipment reciprocity error $\mathbf{E}_m$
   and base station reciprocity error $\mathbf{E}_b$.

2. The method according to claim 1, wherein the algorithm adopting LS criterion is an elementary least square ELS algorithm.

3. The method according to claim 1, wherein the algorithm adopting MMSE criterion is one of a matrix least square MLS algorithm and a matrix MMSE algorithm.

4. The method according to any one of claims 1-3, further comprising a step of:

   updating the one of the $\mathbf{E}_m$ and $\mathbf{E}_b$ based on $\mathbf{H}_{DL} = \mathbf{E}_m^{-1} \mathbf{H}_{UL}^T \mathbf{E}_b$ in accordance with the calculated other one

   of the $\mathbf{E}_m$ and $\mathbf{E}_b$ utilizing a further algorithm adopting MMSE criterion.

5. The method according to claim 4, wherein the further algorithm adopting MMSE criterion is one of a matrix least square MLS algorithm and a matrix MMSE algorithm.

6. The method according to any one of claims 1-3, wherein the method is performed at a user equipment or a base station.

7. A device for reciprocity error calibration, comprising:

   a downlink measurement module configured to measure downlink channel response $\mathbf{H}_{DL}$;
   an uplink measurement module configured to measure uplink channel response $\mathbf{H}_{UL}$;
   an LS calculation module configured to calculate one of a user equipment reciprocity error $\mathbf{E}_m$ and a base station
   reciprocity error $\mathbf{E}_b$ utilizing least square LS criterion

   based on the $\mathbf{H}_{DL}$ and $\mathbf{H}_{UL}$ in accordance with a reciprocity model $\mathbf{H}_{DL} = \mathbf{E}_m^{-1} \mathbf{H}_{UL}^T \mathbf{E}_b$;

   an MMSE calculation module configured to calculate the other one of the $\mathbf{E}_m$ and $\mathbf{E}_b$ based on the calculated
   one of the $\mathbf{E}_m$ and $\mathbf{E}_b$ utilizing an algorithm adopting minimum mean square error MMSE criterion; and
   a reciprocity error calibration module configured to perform a reciprocity error calibration operation utilizing the
   calculated user equipment reciprocity error $\mathbf{E}_m$ and base station reciprocity error $\mathbf{E}_b$.

8. The device according to claim 7, wherein the algorithm adopting LS criterion is an elementary least square ELS algorithm.

9. The device according to claim 7, wherein the algorithm adopting MMSE criterion is one of a matrix least square MLS algorithm and a matrix MMSE algorithm.

10. The device according to any one of claims 7-9, further comprising:

an updating module configured to update the one of the $\mathbf{E}_m$ and $\mathbf{E}_b$ based on $\mathbf{H}_{DL} = \mathbf{E}_m^{-1} \mathbf{H}_{UL}^t \mathbf{E}_b$ in accordance with the calculated other one of the $\mathbf{E}_m$ and $\mathbf{E}_b$ utilizing a further algorithm adopting MMSE criterion.

11. The device according to claim 10, wherein the further algorithm adopting MMSE criterion is one of a matrix least square MLS algorithm and a matrix MMSE algorithm.

12. The device according to any one of claims 7-9, wherein the device is implemented at a user equipment or a base station.

Fig. 1

Fig. 2

Fig. 3

Start

— S101

UE measuring downlink
response $H_{DL}$ and feeds
it back to the eNB

— S102

eNB obtaining the downlink
response $H_{DL}$ and measuring
uplink response $H_{UL}$

— S103

Calculating one of the user
equipment reciprocity error and
the base station reciprocity error
utilizing an algorithm adopting LS
criterion

— S104

Calculating the other one of the
user equipment reciprocity error
and the base station reciprocity
error utilizing an algorithm
adopting MMSE criterion

— S105

Performing reciprocity calibration
operation utilizing the calculated
reciprocity errors

End

Fig. 4

Base Station

Receiving module

$H_{DL}$

User equipment

Transmitting module

Uplink measurement
module
102

Downlink measurement
module
101

LS calculating module
103

MMSE calculating
module
104

Reciprocity error
calibration module
105

Fig. 5

Fig. 6

# INTERNATIONAL SEARCH REPORT

| | International application No. |
|---|---|
| | PCT/CN2010/001595 |

### A. CLASSIFICATION OF SUBJECT MATTER

See Extra Sheet

According to International Patent Classification (IPC) or to both national classification and IPC

### B. FIELDS SEARCHED

Minimum documentation searched (classification system followed by classification symbols)

IPC: H04B, H04L

Documentation searched other than minimum documentation to the extent that such documents are included in the fields searched

Electronic data base consulted during the international search (name of data base and, where practicable, search terms used)

CPRSABS, CNKI, CNTXT, WPI, EPODOC: reciproc+, error, correct, regulat, modif+, calibrat+, adjust, TDD, MIMO, WIMAX, WIFI, COMP, CDMA, uplink, downlink, least w square, LS, minimum w mean w square, MSE, channel, link, tunnel, user w equipment, UE, base w station, enb

### C. DOCUMENTS CONSIDERED TO BE RELEVANT

| Category* | Citation of document, with indication, where appropriate, of the relevant passages | Relevant to claim No. |
|---|---|---|
| A | CN101015179A（INTEL CORP）08 Aug. 2007（08.08.2007）the whole document | 1-12 |
| A | CN101133565A（QUALCOMM INC）27 Feb. 2008（27.02.2008）the whole document | 1-12 |
| A | 3GPP TSG RAN WG1 MEETING, R1-094622, Channel Reciprocity Modeling and Performance Evaluation, 13 Nov. 2009（13.11.2009）the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 Jan. 2011（10.01.2011） | **20 Jan. 2011 (20.01.2011)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>WANG, Hongli<br>Telephone No. (86-10)62411281 |

Form PCT/ISA/210 (second sheet) (July 2009)

## INTERNATIONAL SEARCH REPORT
Information on patent family members

International application No.

PCT/CN2010/001595

| Patent Documents referred in the Report | Publication Date | Patent Family | Publication Date |
|---|---|---|---|
| CN101015179A | 08.08.2007 | US2006056532A1 | 16.03.2006 |
| | | WO2006031506A1 | 23.03.2006 |
| | | GB2432491A | 23.05.2007 |
| | | DE112005002157T5 | 05.07.2007 |
| | | US7366245B2 | 29.04.2008 |
| | | GB2432491B | 24.06.2009 |
| | | TW200625886A | 16.07.2006 |
| | | TW305457B1 | 11.01.2009 |
| CN101133565A | 27.02.2008 | WO2006081550A2 | 03.08.2006 |
| | | EP1847036A2 | 24.10.2007 |
| | | INMUMNP200701275E | 02.11.2007 |
| | | KR20070107073A | 06.11.2007 |
| | | SG143245A1 | 27.06.2008 |
| | | JP2008530834T | 07.08.2008 |
| | | BRPI0607131A2 | 04.08.2009 |
| | | TW200637230A | 16.10.2006 |
| | | KR20100025593A | 09.03.2010 |
| | | KR100958957B1 | 20.05.2010 |
| | | SG161317A1 | 27.05.2010 |

Form PCT/ISA /210 (patent family annex) (July 2009)

## INTERNATIONAL SEARCH REPORT

International application No.

PCT/CN2010/001595

Continuation of: **A. CLASSIFICATION OF SUBJECT MATTER**

H04B 7/005 （2006.01） i
H04B 7/06 （2006.01） n
H04B 7/08 （2006.01） n

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIAN LIU et al.** OFDM-MIMO WLAN AP Front-end Gain and Phase Mismatch Calibration. *Proc. IEEE RAWCON,* September 2004

- **A. BOURDOUX ; B. COME ; N. KHALED.** Non-reciprocal transceivers in OFDM/SDMA Systems: Impact and Mitigation. *Proc. IEEE Radio and Wireless Conference,* August 2003, 183-186
- **J. PROAKIS.** Digital Communications. McGraw-Hill Science, 15 August 2000